(19) Europäisches Patentamt

European Patent Office

Office européen des brevets

(11) **EP 1 555 241 A1**

(12) **EUROPEAN PATENT APPLICATION**

(43) Date of publication:
20.07.2005 Bulletin 2005/29

(51) Int Cl.[7]: **C01B 17/04**

(21) Application number: **04075104.2**

(22) Date of filing: **16.01.2004**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **Jacobs Nederland B.V.**
**2332 CB Leiden (NL)**

(72) Inventors:
• **Borsboom, Johannes**
**2282 VC Rijswijk (NL)**
• **van Nisselrooij, Petrus Fransciscus Maria Theresia**
**6511 SV Nijmegen (NL)**

• **van Warners, Anne**
**1318 AE Almere (NL)**
• **van Yperen, Renee**
**6961 PL Eerbeek (NL)**
• **Chopra, Vijay Kumar**
**Calgary, Alberta T3J 1Y1 (CA)**

(74) Representative:
**Prins, Adrianus Willem, Mr. Ir. et al**
**Vereenigde,**
**Nieuwe Parklaan 97**
**2587 BN Den Haag (NL)**

(54) **Recovery of sulfur from a hydrogen sulfide containing gas**

(57) The invention relates to a process for the recovery of sulfur from a hydrogen sulfide containing gas, comprising:

a. Oxidizing part of the hydrogen sulfide in a gaseous stream with oxygen or an oxygen containing gas in an oxidation stage to sulfur dioxide, and thereafter reacting the major part of the remaining hydrogen sulfide and the major part of sulfur dioxide to elemental sulfur and water,
b. reacting the product gas of oxidation stage a) in at least three catalytic reaction systems and

c. selectively oxidizing $H_2S$ in the gas leaving stage b (in particular leaving) the (last) sub-dewpoint Claus reactor) to elemental sulfur, preferably employing for this purpose a catalytic stage including a selective oxidation catalyst, which is substantially insensitive to the presence of water vapor in the gas stream and is ineffective in promoting the establishment of the Claus equilibrium: $2\ H_2S + SO_2 \Leftrightarrow 2\ H_2O + 3/n\ S_n$.

**Description**

In a number of processes, such as the refining of crude oil, the purification of natural gas and the production of synthesis gas from, for example, fossil fuels, sulfur containing gas, in particular $H_2S$ containing gas, is released. On account of its high toxicity and its smell, the emission of $H_2S$ is not permissible.

The best-known and most suitable process for removing sulfur from gas by recovering sulfur from hydrogen sulfide is the so-called Claus process. In this process hydrogen sulfide is converted by oxidation to a considerable extent into elemental sulfur; the sulfur thus obtained is separated from the gas by condensation. The residual gas stream (the so-called Claus residual gas) still contains some $H_2S$ and $SO_2$.

The method of recovering sulfur from sulfur containing gases by the so-called Claus process is based on the following overall reactions:

$$2\,H_2S + 3\,O2 \quad \Rightarrow \quad 2\,H_2O + 2\,SO_2 \tag{1}$$

$$4\,H_2S + 2\,SO_2 \quad \Leftrightarrow \quad 4\,H_2O + 6/n\,S_n \tag{2}$$

Reactions (1) and (2) result in the main reaction:

$$2\,H_2S + O_2 \quad \Rightarrow \quad 2\,H_2O + 2/n\,S_n \tag{3}$$

A conventional Claus plant - suitable for processing gases having an $H_2S$ content of between 50 and 100% - comprises a burner with a combustion chamber, the so-called thermal stage, followed by a number of reactors - generally two or three - filled with a catalyst. These last stages constitute the so-called catalytic stages.

In the combustion chamber, the incoming gas stream, which is rich in $H_2S$, is combusted with an amount of air at a temperature of approximately 1200°C. This amount of air is adjusted so that one third of the $H_2S$ is fully combusted to form $SO_2$ in accordance with the following reaction:

$$2\,H_2S + 3\,O_2 \quad \Rightarrow \quad 2\,H_2O + 2\,SO_2 \tag{1}$$

After this partial oxidation of $H_2S$ the non-oxidized part of the $H_2S$ (i.e. basically two-thirds of the amount offered) and the $SO_2$ formed react further as to a considerable extent, in accordance with the Claus reaction:

$$4\,H_2S + 2\,SO_2 \quad \Leftrightarrow \quad 4\,H_2O + 3\,S_2 \tag{2}$$

Thus, in the thermal stage, approximately 60-75% of the $H_2S$ is converted into elemental sulfur.

The gases coming from the combustion chamber are cooled to about 160°C in a sulfur condenser, in which the sulfur formed is condensed. Subsequently, the condensed sulfur flows into a sulfur pit through a siphon.

The non-condensed gases, of which the molar ratio of $H_2S:SO_2$ is unchanged and still 2:1, are subsequently heated to about 250°C, and passed through a first catalytic reactor in which the following equilibrium is established:

$$4\,H_2S + 2\,SO_2 \quad \Leftrightarrow \quad 4\,H_2O + 6/n\,S_n \tag{2}$$

The gases coming from this catalytic reactor are subsequently cooled again in a sulfur condenser, from which the liquid sulfur formed is recovered and the remaining gases, after being reheated, are passed to a second catalytic reactor.

If the gaseous feedstock contains $H_2S$ concentrations of about 15 to 50%, the above described "straight-through" process is not used, but instead a variant thereof, the so-called "split-flow" process. In the latter process one-third of the total amount of feedstock is passed to the thermal stage and combusted completely to $SO_2$ therein. Two-thirds of the feedstock is passed directly to the first catalytic reactor, bypassing the thermal stage. When the feedstock contains $H_2S$ concentrations of less than 15% the Claus process can no longer be used. The process then used is, for example, the so-called Recycle Selectox process, in which the feedstock is passed with an adjusted amount of air into an oxidation reactor, the so-called oxidation stage. The reactor contains a catalyst, which promotes the oxidation of $H_2S$ to $SO_2$, and the amount of oxidation air is adjusted so that an $H_2S:SO_2$ ratio of 2:1 is established, after which the Claus reaction proceeds. The gas from the oxidation reactor is cooled in a sulfur condenser, in which the sulfur formed is condensed and discharged.

To dissipate the reaction heat generated in the oxidation reactor, a portion of the gas stream coming from the sulfur condenser is recirculated to the oxidation reactor.

It is clear that in the Recycle Selectox process, the oxidation stage, which is catalytic and does not lead to high temperatures, is equivalent to the thermal stage in the Claus process. In the following, both the thermal Claus stage and the oxidation stage of the Recycle Selectox process are referred to as oxidation stages.

The sulfur recovery percentage in a conventional Claus process configuration is 92-97%, depending on the number of catalytic stages.

By known processes, the $H_2S$ present in the residual gas from the Claus converter is converted, by combustion or some other form of oxidation, into $SO_2$, where after this $SO_2$ is emitted to the atmosphere. This has been permissible for low concentrations or small amounts of emitted $SO_2$ for a long time. Although $SO_2$ has less noticeable impact than $H_2S$, it is so harmful that its emission is limited by ever-stricter environmental legislation.

In the Claus process as described above, in view of the equilibrium reaction which occurs, the $H_2S:SO_2$ ratio plays an important role. In order to obtain an optimum conversion to sulfur, this ratio should be 2:1. In general, this ratio is controlled by means of a so-called $H_2S/SO_2$ residual gas analyzer. This analyzer measures the $H_2S$ and $SO_2$ concentrations in the residual gas. A controller then maintains the ratio of 2:1 constant on the basis of the equation:

$$[H_2S] - 2\,[SO_2] = 0,$$

by varying the amount of combustion air, depending on the fluctuations in the feed gas composition and the resulting deyiation in the above equation. Such a control of the process, however, is highly sensitive to these fluctuations, resulting in often less than optimal conversion.

A second negative factor is that the theoretical sulfur recovery efficiency (calculated on the basis of the amount of $H_2S$ supplied) is limited to approx. 97%, due to thermodynamic constraints imposed on the Claus equilibrium reaction. As a result, the residual gas from the last catalytic stage still contains substantial amounts of $H_2S$ and $SO_2$ (in a molar ratio of 2 : 1).

The $H_2S$ present in the residual gas can be separated by absorption in a liquid.

The presence of $SO_2$ in the residual gas, however, is a disturbing factor in the $H_2S$ separation process. It must therefore be removed first, complicating the residual gas treatment.

The $SO_2$ in the residual gas reacts with conventional liquid $H_2S$ absorbents, forming undesirable products. To prevent undesirable reactions, the $SO_2$ is generally catalytically reduced with hydrogen to form $H_2S$ over an $Al_2O_3$ supported cobalt-molybdenum catalyst, in accordance with the so-called SCOT process.

The total amount of $H_2S$ is subsequently separated by liquid absorption in the usual manner.

In the SCOT process the sulfur components, other than $H_2S$, such as $SO_2$ (sulfur dioxide) and sulfur vapor ($S_6$ and $S_8$) are fully hydrogenated to $H_2S$ according to the following reactions:

$$SO_2 + 3\,H_2 \quad \Rightarrow \quad H_2S + 2\,H_2O \qquad\qquad (4)$$

$$S_6 + 6H_2 \quad \Rightarrow \quad 6\,H_2S \qquad\qquad (5)$$

$$S_8 + 8\,H_2 \quad \Rightarrow \quad 8\,H_2S \qquad\qquad (6)$$

Other components, such as CO, COS and $CS_2$, are hydrolyzed according to:

$$COS + H_2O \Rightarrow \quad H_2S + CO_2 \qquad\qquad (7)$$

$$CS_2 + 2\,H_2O \quad \Rightarrow \quad 2\,H_2S + CO_2\ . \qquad\qquad (8)$$

$$CO + H_2O \quad \Rightarrow \quad H_2 + CO_2 \tag{9}$$

Above conversions to $H_2S$ are performed with a cobalt-molybdenum catalyst on alumina at a temperature of about 280-330°C. For the SCOT process it is required that sulfur vapor is hydrogenated to $H_2S$, and also that $SO_2$ is completely converted to $H_2S$ down to ppm level, to prevent plugging/corrosion in the downstream water quench column. This type of hydrogenation can be defined as high temperature hydrogenation.

In accordance with another method, for example, the BSR Selectox process, after reduction of the $SO_2$ in the residual gas to $H_2S$ and after condensation of the water vapor, the gas is passed into an oxidation reactor, as in the Recycle Selectox process. The oxidation air is adjusted so that an $H_2S:SO_2$ ratio of 2:1 is obtained, where after the Claus reaction proceeds. Both in the SCOT process and in the BSR Selectox process, the removal of $SO_2$ from the residual gas is a relatively expensive operation.

The above described after-treatment of the gases, carried out by means of a so-called tail gas treater, which involves an investment of another 50-100% of the cost of the preceding Claus converter, can result in an increase of the sulfur recovery efficiency of up to 98-99.8%.

Another group of processes to increase the sulfur recovery efficiency of a Claus process are the so-called sub-dewpoint processes, such as CBA (Cold Bed Absorption), MCRC (Maximum Claus Recovery Concept), Sulfreen and Maxisulf. In these processes, one or more catalytic reactors are operated below the sulfur vapor dewpoint. By doing this, the exothermic Claus equilibrium reaction

$$2\,H_2S + SO_2 \quad \Leftrightarrow \quad 3/n\,S_n + 2\,H_2O \tag{2a}$$

shifts to the right-hand side because of the lower catalyst temperature, and shifts even further to the right-hand side, because the major part of the produced elemental sulfur vapor $S_n$ is removed from the gas phase by condensation into the pores of the Claus catalyst. The majority of the sulfur vapor produced by the Claus reaction is condensed in this way in the catalytic bed, and the remaining sulfur vapor corresponds with, and is limited to, the sulfur vapor pressure at the obtained catalyst temperature.

Consequently, the so-called sub-dewpoint reactor(s) are slowly loaded with liquid sulfur in the catalyst pores. When the pores are almost completely filled with liquid sulfur, the Claus reaction will not proceed anymore, and the catalytic sub-dewpoint bed has to be freed from liquid sulfur by means of evaporation. This is indicated as the regeneration of the sub-dewpoint reactor.

The above-mentioned processes differ from each other in the way this regeneration is performed. For CBA, the hot process gas from the preceding conventional catalytic Claus reactor is used for this purpose. For MCRC, the hot process gas from the preceding conventional Claus reactor is cooled in a sulfur condenser, after which it is reheated in a re-heater to 300-350°C and directed to the sub-dewpoint reactor to be regenerated.

The last reactor is always a sub-dewpoint reactor operated at a low temperature of typically 125-150°C. In the Sulfreen process, the sub-dewpoint reactor to be regenerated is blocked-in into a closed recycle loop, which contains a recycle blower, a reheater and a sulfur condenser.

In the sub-dewpoint processes, sulfur is formed by the Claus reaction of $H_2S$ and $SO_2$ according to reaction (2a). For optimum sulfur recovery efficiency, the ratio $H_2S:SO_2$ should be 2:1 as for a "normal" Claus process. This means, that if excess $H_2S$ is available compared to $SO_2$ (ratio $H_2S:SO_2$ > 2:1), the excess $H_2S$ cannot be converted to elemental sulfur because there is not enough $SO_2$ available.

Consequently, the sulfur recovery efficiency will decease. Excess $H_2S$ will occur if not enough combustion air is supplied to the main ($H_2S$) burner at the front end of the sulfur recovery unit. The same decrease in recovery efficiency will occur when $SO_2$ is present in excess of $H_2S$ (ratio $H_2S:SO_2$ < 2: 1). It can be calculated that, for typical refinery acid gas feed ($H_2S$ content is some 90 mol.%), a combustion air shortage to the main burner of 1.0% will result in a recovery decrease of 0.65% and a combustion air excess to the main burner of 1.0%, will result in a recovery decrease of 0.30%. This is significant on an overall recovery efficiency of 99.3%, which is attainable for this type of processes. Consequently, the -correct- amount of combustion air is a crucial process parameter. The amount of combustion air, however, is difficult to control. This is a major disadvantage of the sub-dewpoint processes. It is an object of the present invention is to overcome this sensitivity towards the correct amount of combustion air.

During the switching of the sub-dewpoint reactors, a decrease in recovery efficiency is experienced for a 3-reactor plant (one conventional Claus reactor and 2 sub-dewpoint reactors). This is caused by the fact, that the first step in the reactor switching process is the opening of the valve in the hot feed line to the cold (final) reactor which reactor at that time has a reduced conversion capability due to its pores being filled with liquid sulfur. Most of the gas will then begin to pass only partly converted through the deactivated cold converter and from the cold condenser to the incinerator. At this point the plant operates effectively more like a 2-reactor MCRC unit then like a 3-reactor unit and the sulfur recovery will be reduced.

The sub-dewpoint processes are equipped with switching valves for the batch-wise regeneration of the sulfur loaded catalytic sub-dewpoint reactors. The switching valves are sensitive for leaks. Liquid sulfur may combine with soot, salts, refractory dust, catalyst dust and pipe scaling to form sulfur concrete. This very hard sulfur concrete may precipitate and/or collect on the valve seat, causing the valve not to close completely. Consequently, the valve will start to leak. Process gas will bypass the final sub-dewpoint reactor and the sulfur recovery will drop.

The overall sulfur recovery efficiencies of the sub-dewpoint processes are normally in the range of 98.5-99.5%, depending on the acid gas feed composition and the number of catalytic (sub-dewpoint) reactors. Very high recoveries, in the range of 99.5-99.7%, cannot be reached. As the requirements of the authorities will increase in the future to limit the amount of emitted $SO_2$ there is a need for processes with an increased sulfur recovery efficiency.

In US patent specification no. 4,988,494, it is proposed that the $H_2S$ concentration in the gas leaving the last catalytic Claus stage is controlled to have a value ranging between 0.8 and 3% by volume by reducing the quantity of combustion or oxidation air passed to the oxidation stage. The $H_2S$ in the residual Claus gas is subsequently converted with high selectivity to sulfur in a dry-bed oxidation stage.

The increase of the $H_2S$ concentration will result in a decreased $SO_2$ concentration, however, not to very low levels. For an $H_2S$ concentration of 0.8% by volume, the $SO_2$ concentration will be typically 0.03-0.15% by volume, and this will result in a sulfur recovery efficiency loss of typically 0.09-0.45%. As $SO_2$ is not converted in a dry-bed oxidation stage, this will result in appreciable sulfur recovery losses, and consequently sulfur recovery efficiencies close to 100% cannot be reached.

A second disadvantage of operating with excess $H_2S$ compared to $SO_2$ is that the temperature increase in the dry-bed oxidation reactor becomes higher with increasing $H_2S$ concentration.

Higher reactor temperatures will result in an increased formation of $SO_2$ as a result of gas phase and catalytic oxidation of formed sulfur vapor. Also for this reason, a shifted operation towards increased concentrations of $H_2S$ in the outlet of the last Claus converter is not beneficial.

It has been experienced, that if the catalyst bottom temperature in a dry-bed oxidation reactor exceeds 250-260°C, the $H_2S$ oxidation efficiency to elemental sulfur will start to drop from 94-96% to lower values. Combined with a reactor inlet temperature of approximately 180-200°C, this results in an upper limit for an acceptable temperature increase, due to the reaction heat developed, of some 60-80°C, corresponding with 0.8-1.1 vol.% of $H_2S$ in the process gas to the dry-bed oxidation stage.

The shifted operated sulfur plant, followed by a dry-bed oxidation step with an oxidation catalyst which is not effective in promoting the Claus reaction, is known as the SUPERCLAUS® or SUPERCLAUS®-99 process.

The SUPERCLAUS® process, as well as the SUPERCLAUS®-99.5 process, is described in "SUPERCLAUS® - the answer to Claus plant limitations", Lagas, J.A.; Borsboom, J., Berben, P.H., 38th Canadian Chemical Engineering Conference, Edmonton, Canada.

Surprisingly it has now been found that it is possible to increase the sulfur recovery by very simple process modifications. According to the invention a process for the recovery of sulfur from a hydrogen sulfide containing gas, comprises:

a. Oxidizing part of the hydrogen sulfide in a gaseous stream with oxygen or an oxygen containing gas in an oxidation stage to sulfur dioxide, and thereafter reacting the major part of the remaining hydrogen sulfide and the major part of sulfur dioxide to elemental sulfur and water;

b. reacting the product gas of oxidation stage a) in at least three catalytic reaction systems wherein

- at least one system (i) is operating above the sulfur dewpoint in accordance with the Claus equation

$$2\,H_2S + SO_2 \Leftrightarrow 2\,H_2O + 3/n\,S_n;$$

- at least one system (ii) is operating at a sub-dewpoint temperature in accordance with the Claus equation, downstream of system (i); and
- at least one system (iii) is regenerating above the dewpoint of sulfur or operating in accordance with the Claus equation above the dewpoint of sulfur, usually down stream of system (i) or off-line; and

c. selectively oxidizing $H_2S$ in the gas leaving stage b ( in particular leaving the (last) sub-dewpoint Claus reactor) to elemental sulfur, preferably employing for this purpose a catalytic stage including a selective oxidation catalyst, which is substantially insensitive to the presence of water vapor in the gas stream and is ineffective in promoting the establishment of the Claus equilibrium: $2 H_2S + SO_2 \Leftrightarrow 2 H_2O + 3/n\ S_n$.

System (i) in stage b may very suitably be a Claus.reactor known in the art ( i.e. a conventional reactor) operating under conditions known in the art.

Usually, the reactor(s) in stage b) that operate sub-dewpoint periodically switch between the sub-dewpoint operation (as system ii) and regeneration (as system iii).

The regeneration of system (iii) is typically carried out to vaporize the liquid sulfur collected in the reactor during sub-dewpoint operation. After removal of the vaporized sulfur, the system (iii) may switch to sub-dewpoint operation and serve as system (ii).

System (iii) may be regenerated off-line or on-line, preferably on-line, e.g. as indicated below in the description and the figures. In particular in an on-line configuration, system (iii) is usually situated upstream of system (ii).

A process according to the invention may very suitably be carried out without removal of water prior to stage c).

It has been found that in accordance with the invention it is possible to reduce or even nullify the decrease in recovery efficiency due to the switching of the sub-dewpoint beds from the Claus conversion stage to the regeneration stage and visa versa, as for instance in a conventional MCRC process with one catalyst bed in the sub-dewpoint mode.

It has further been found that a process according to the invention mitigates the sulfur recovery decrease, which would otherwise occur in a conventional sub-dewpoint process due to equipment problems such as leaking switching valves

In addition the present invention allows the increase of the sulfur recovery efficiency of the sub-dewpoint process compared to a known sub-dewpoint process.

It is preferred in said step c) of selectively oxidizing $H_2S$ also employing a stoichiometric excess of oxygen sufficient to result in an overall excess of oxygen being employed in the total process for the recovery of sulfur from the hydrogen sulfide containing gas.

It should be noted, that complete conversion/removal of $SO_2$, in the residual Claus gas, down to the ppmv level as in the SCOT process, is not required in case the sub-dewpoint Claus reactor step is followed by a dry-bed oxidation step. Conversion of $SO_2$ to sulfur vapor down to a level of approximately 100 ppmv (typically to about 20-200 ppmv) is acceptable and will result in negligible recovery efficiency losses.

In the SUPERCLAUS® process, as described in US-A 4,988,494, a significant residual concentration of $SO_2$ is left in the process gas to the dry-bed oxidation stage. This residual $SO_2$ not only decreases the overall sulfur recovery efficiency, because it is not converted to elemental sulfur, but also decreases the activity of the selective oxidation catalyst.

If one wants to overcome this decrease of activity in the known conventional SUPERCLAUS® process, the temperature level in the dry-bed oxidation reactor is preferably increased, but a higher temperature level will decrease the oxidation efficiency to elemental sulfur. Consequently, very high oxidation efficiencies in the dry-bed oxidation stage, in the range of 94-96%, are not possible with process gas containing concentrations of $SO_2$ in the range of 300-2000 ppmv.

The control of the process with an incorporated low temperature sub-dewpoint Claus reactor is also much more flexible. A varying $SO_2$ content in the process gas from the last (conventional) catalytic Claus reactor (system (i) , operating above dewpoint) will not result in varying recovery losses by $SO_2$ slippage, because basically all $SO_2$ can be converted to elemental sulfur in the sub-dewpoint stage. This makes the control on $H_2S$ much less sensitive to process fluctuations. As in the SUPERCLAUS process, the ratio $H_2S$ to $SO_2$ is more than 2. This excess of $H_2S$ suppresses the $SO_2$ content to very low levels.

In a process according to the present invention, the concentration of the hydrogen sulfide gas in the residual gas can be controlled in a surprisingly simple way. Thus, for example, the signal from an $H_2S$ analyzer in the residual gas can be used to set or adjust the amount of combustion air to the Claus burner, or oxidation air to the dry-bed oxidation stage, such that the process gas leaving the sub-dewpoint stage is in excess, i.e. the $H_2S/SO_2$ ratio is larger than 2. Such an $H_2S$ control would normally be considered unsuitable for a sub-dewpoint Claus process because a sub-dewpoint Claus process operates, like the conventional Claus process, at its optimum if the ratio $H_2S/SO_2$ in the tail gas equals 2, regardless of the temperature of the final reactor. In contrast, the optimum $H_2S$ concentration for the SUPERCLAUS feed gas is dependent on, among others, the temperature of the preceding Claus stage, and is in a normal SUPERCLAUS plant kept at a fixed value because the temperature of the preceding Claus stage is virtually constant. During switching of the reactors in the process of the current invention however, the normal SUPERCLAUS control philosophy of a fixed $H_2S$ concentration in the Claus tail gas would result in a recovery less than that of the sub-dewpoint process alone. This would be a serious disadvantage of the present inv ention. It is an object of the present invention to minimize the recovery losses during switching, by temporarily adjusting the $H_2S$ setpoint to a larger value, 0.5 - 3.0 vol% preferably 1 - 1.5 vol%, as long as the switching process continues, i.e. as long as the switching valves are being opened and closed, respectively. Normally in a conventional SUPERCLAUS plant, the $H_2S$ setpoint is preferably kept below 1.0 vol% to prevent excessive $SO_2$ formation at the resulting high bottom temperatures in the selective oxidation stage. However, it has been found that a higher $H_2S$ setpoint during a relatively short time such as required for switching the sub-dewpoint reactors does not lead to excessive $SO_2$ formation.

It has been measured in an MCRC unit, processing refinery acid gas, that the $SO_2$ content of the process gas at the outlet of the last sub-dewpoint Claus reactor, containing an $H_2S$ concentration of 0.50 vol.% (wet basis), was 11 ppmv. This extremely low level of $SO_2$ is caused by the excess $H_2S$ operation and the low reactor temperature, which suppresses the $SO_2$ content further, i.e. the Claus equilibrium of equation (2a) is almost completely on the sulfur side. This very low $SO_2$ level results in a negligible sulfur recovery efficiency loss. Also, a fluctuation of this $H_2S$ content, say $0.5 \pm 0.2$ %, will have a marginal effect on the $SO_2$ content and consequently on the $SO_2$ sulfur recovery efficiency loss. This effect stabilizes the upstream part (thermal stage, first Claus reactor stage (system i), sub-dewpoint reactor stages) of the sulfur recovery unit, i.e. a fluctuating excess $H_2S$ in the MCRC tail gas will have only a marginal (very small) effect on the $SO_2$ content and the $SO_2$ sulfur recovery efficiency losses. This excess $H_2S$ also makes the control of the combustion air much more insensitive with respect to the plant performance recovery efficiency.

A process according to the invention can be suitably applied for the treatment of gases containing hydrogen sulfide, but also for gases containing both hydrogen sulfide and substantial quantities of ammonia (cf NL-C-176160), in the latter case, the temperature in the combustion chamber is preferably at least 1250°C.

Under stoichiometric combustion in the Claus burner generates excess $H_2S$ over $SO_2$ (molar ratio > 2:1). A disadvantage of operating with excess $H_2S$ over $SO_2$ in the Claus tail gas to reduce the $SO_2$ content, as in the SUPERCLAUS® process, is that this operation mode results in less combustion air to the main ($H_2S$) burner compared to the conventional mode of operation with $H_2S:SO_2$ = 2:1. This will result in a decrease of temperature of combustion in the combustion chamber, which is detrimental to the destruction efficiency of ammonia, which requires high temperatures. Sub- dewpoint Claus conversion, before dry-bed oxidation, allows for more oxygen to the Claus burner, and therefore for higher combustion temperatures, while maintaining very low $SO_2$ levels in the residual Claus gas to the dry bed oxidation stage.

In stage a) ( the so called thermal stage) part of the hydrogen sulfide is preferably oxidized to sulfur dioxide, under the conditions that are comparable to a conventional SUPERCLAUS or sub-dewpoint process.

In stage b) the sub-dewpoint reactor or reactors is/are preferably operated under the following conditions.

The inlet temperature is preferably controlled and is preferably at least about 120 °C , more preferably at least 125 °C.

The outlet temperature is resulting and is typically about 150 °C or less.

Very good results have been achieved wherein the sub-dewpoint reactor comprises Claus catalysts with an increased macropore volume and an increased total pore volume.

In stage b) preferably at least one reactor is operating as a Claus reactor under sub-dewpoint conditions while at least one other reactor is being regenerated. The reactor operating under sub-dewpoint conditions and the regenerating reactor preferably comprise the same catalytic material After an appropriate period the reactors preferably are switched, such that the regenerated reactor takes over the Claus reaction and the other reactor is regenerated.

In a process according to the invention, the hydrogen sulfide gas remaining in the residual gas can be processed after stage b to form sulfur by a known per se method. Such methods are described in the literature. Preferably, however, the remaining gaseous hydrogen sulfide is oxidized with air in an oxidation stage to form elemental sulfur in accordance with the following reaction:

$$2\,H_2S + O_2 \Rightarrow 2\,H_2O + 2/_n\,S_n \tag{3}$$

It has been found that, when the concentration of the hydrogen sulfide leaving the last catalytic sub-dewpoint Claus stage is maintained at a value of between 0.1 and 0.5% by volume, , an optimum sulfur recovery percentage of 99.5-99.8 can be obtained, after selective oxidation. The oxidation can, suitably take place by dry-bed oxidation or by oxidation in a liquid, in which, in general, sulfur and water vapor have first been removed from the residual gas.

In particular in case dry-bed oxidation is used in stage c, the $H_2S$ concentration in the residual gas is preferably maintained between 0.2 and 0.4% by volume, because up to about 0.4% by volume of $H_2S$ a very satisfactory total sulfur recovery percentage is observed.

In a dry oxidation bed, the oxidation to sulfur can be effected by a known per se method using an oxidation catalyst. One example of an oxidation catalyst and the application thereof is described in US-A-4311683.

The method described therein is the Selectox process (Hass, R.H.; Ingalis, M.N.; Trinker, T.A.; Goar, B.G., Purgason, R.S.S.: "Process meets sulfur recovery needs", Hydrocarbon Processing, May 1981, pages 104-107). In this process, $H_2S$ is oxidized to S and $SO_2$ using a special catalyst such as vanadium pentoxide on alumina. Approximately 80% of the $H_2S$ supplied is oxidized to elemental sulfur, if water vapor is removed to a substantial extent. Another application of a dry-bed process which is not sensitive to water vapor in the process gas is the absorption of

$H_2S$ in an absorption mass as described, for example, in European patent no. 71983.

Another type of catalyst, which may be applied for the dry-bed oxidation, comprises a carrier of which under the reaction conditions applied, the surface exposed to the gaseous phase does not exhibit activity for the Claus reaction.

Such a catalyst may be one described in US patent specification number 4,818,740 and 5,286,697 or in WO-A 9732813.

Very good results have been achieved with a catalyst for the selective oxidation step c., comprising a carrier material of which under the reaction conditions applied, the surface exposed to the gaseous phase does not exhibit activity for the Claus reaction. Preferred examples of such carriers include, inter alia, silica and alpha-alumina

The catalytically active material of the oxidation catalyst is preferably present on the carrier in a proportion of 3-10% by-weight calculated on the total mass of the catalyst. Suitable examples of catalytically active materials include metal oxides. The metal oxide may be an oxide of only one metal, a mixed oxide of two or more metals or a mixture of metal oxides. Very suitable is a metal oxide comprising iron oxide. Very good results have been achieved with a mixed oxide of iron and at least one second metal, for instance chromium or zinc.

The BET specific area (e.g. as described in E. Robens *et al.:* "Standardization of sorption measurements and reference materials for dispersed and porous solids", Ch. 3 of: A. Dabrowski (ed.): "Adsorption and its Application in Industry and Environmental Protection". Vol. 1: "Application in Industry"; Studies in surface science and catalysis, Vol. 120A; Elsevier, Amsterdam 1999) of the catalyst is preferably more than 20 $m^2$/g catalyst. The upper limit is not particularly critical. Very good results have been achieved with a BET specific area in the range of about 30 to about 120 $m^2$/g .

The average pore radius is preferably at least 25 Å, as determined by mercury intrusion porosimetry, more preferably about 100 - 700 Å.

It has been found that - with a view to a maximum sulfur recovery percentage - the choice of the optimum volume percent of $H_2S$ in the residual gas is depending on the extent of the efficiency of the last oxidation from $H_2S$ to sulfur in the dry oxidation bed.

The minimum volume percent of $H_2S$, corresponding with the maximum volume percent of $SO_2$, in the residual gas from the last Claus stage, is determined by the amount of $SO_2$ in the residual gas. This should be low enough, in practice typically lower than 200 ppmv, in order to result in very small sulfur recovery efficiency losses. The corresponding minimum volume percent of $H_2S$ is then usually approximately 0.2 vol.%.

For this reason (the upper $SO_2$ limit), the $H_2S$ volume percent is generally preferred not to be lowered too much. Also, when the $H_2S$ volume percentage to the dry-bed oxidation reactor is too low, the oxidation efficiency to sulfur in the dry-bed oxidation reactor is not at its maximum.

When the $H_2S$ volume percentage is too high, the overall recovery efficiency will also decrease. For above reasons, the $H_2S$ volume percentage in the process gas from the last Claus stage, is preferably in the range of about 0.2-0.4 vol.%.

Liquid oxidation, too, can take place using a known process. Examples of known processes are the Stretford process (the Chemical Engineer, February 1984, pages 84 ff), the Lo-Cat process of Air Resources Inc. or the Takahax process.

The control of the oxidation air to the selective oxidation stage is not critical and can thus be kept simple.

A process according to the invention can be carried out in an existing sub-dewpoint Claus plant and requires only relatively simple modifications of the existing control of the gas streams. In case a 3-stage sub-dewpoint Claus plant (with two switching sub-dewpoint reactors) is used, a selective oxidation reactor is provided in the specific embodiment of the present invention, which in relation to the cost involved in other residual gas processing plants is inexpensive. Thus the application of the process according to the present invention leads to considerable economic advantages.

In case a 4-stage sub-dewpoint Claus plant is used only the fourth catalytic reactor needs to be arranged as a selective oxidation reactor. In this case, too therefore, a considerable economic benefit is obtained.

An additional benefit is that the negative effect of the switching of the sub-dewpoint reactors on the $H_2S$ and $SO_2$ content in the tail gas of the sub-dewpoint part, which has the tendency to increase at this switching, resulting in a drop in recovery efficiency, is suppressed by the operation with excess $H_2S$. The $SO_2$ level will increase, but only marginally, without affecting the recovery losses caused by this $SO_2$. In the meantime the $H_2S$ content will not increase because it is on analyzer setpoint control.

Another beneficial effect is that the sub-dewpoint part is operated on excess $H_2S$ mode. This will result in a more reducing process gas, which is very beneficial for the Claus catalyst activity. In this way the sulfate content of the Claus catalyst is maintained at a very low level, resulting in a higher catalyst activity.

The elemental sulfur that is produced in the system can be condensed from the gas flows using conventional systems, such as condensers. In case an especially high sulfur recovery is necessary it may be advantageous to use the system disclosed in EP-A 655,414, more in particular for the treatment of the final product gas flow, after the last treatment.

A beneficial effect is that the sulfur production load shifts more to the last reactor stage, i.e. the selective oxidation reactor or SUPERCLAUS® reactor. This means that the sulfur production of the sub-dewpoint reactor(s) will decrease from approximately 9% of the sulfur quantity in the plant feed, to approximately 7% of the sulfur plant load. Accordingly, the sub-dewpoint reactor can be operated for a longer period of time before it has to be regenerated. Alternatively, less catalyst can be applied in this reactor for the same absorption period.

The most important beneficial effect is, however, that the sulfur recovery efficiency will increase significantly. The sub-dewpoint configuration of MCRC/CBA/Sulfreen/Maxisulf removes the bulk of the feed sulfur and produces a process gas with basically no $SO_2$ (ppmv level) at a relatively low amount of $H_2S$, typically 0.2-0.4 vol.%. This $H_2S$ is oxidized to elemental sulfur in the selective oxidation stage with a high efficiency, resulting in a high overall SRE of typically 99.5-99.8%.

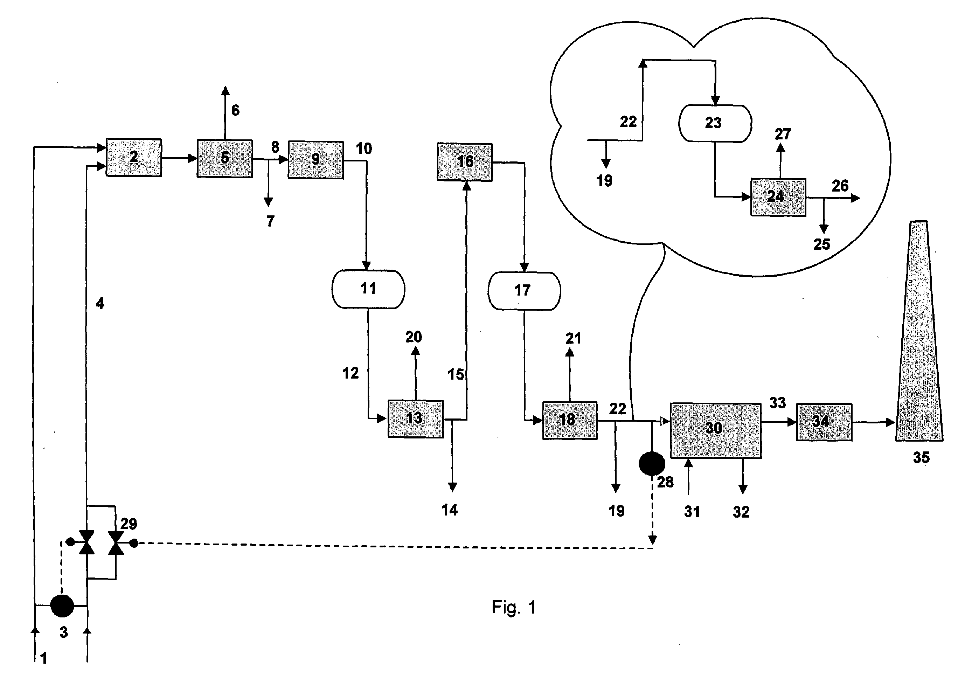

A process according to the present invention will now be described in more detail with reference to the accompanying figures 1, 2 and 3. All parameters (such as temperature) are given by means of preferred examples.

As shown in figure 1, the feedstock gas (=Claus gas) is supplied through line 1 to the Claus burner/combustion chamber 2. The amount of combustion air, controlled by the quantity proportion regulator 3 and $H_2S$ analyzer 28, is supplied to Claus burner/combustion chamber 2 through line 4. The heat generated during the combustion (1200°C) of the Claus gas is dissipated in a boiler 5 heated by spent gases, producing steam that is discharged through line 6.

The Claus reaction takes place in the burner and the combustion chamber. The sulfur formed is condensed in boiler 5 (150°C) and discharged through line 7. The gas is passed through line 8 to a heater 9 where it is heated to the desired reaction temperature of 250°C before being supplied through line 10 to the first Claus reactor 11. In reactor 11 the Claus reaction takes place again, whereby sulfur is formed. The gas is discharged through line 12 to the sulfur condenser 13. The condensed sulfur (150°C) is discharged through line 14. Thereafter the gas is passed through line 15 to the next reactor stage, which again includes a heater 16, a reactor 17 and a sulfur condenser 18. In this reactor the Claus reaction takes place again. In the MCRC process configuration, Claus reactor 17 is in the regeneration mode, at an elevated temperature of 300-350°C, to vaporize the liquid sulfur collected in the Claus catalyst.

The condensed sulfur (125°C) is discharged through line 19. The steam generated in the sulfur condenser is discharged through lines 20, 21 and 27.

The process gas is passed through line 22 to the last Claus reactor 23. This reactor is operating at a low temperature (sub-dewpoint mode). Note that for the MCRC process configuration no heater upstream of this reactor is required. The sulfur is condensed in sulfur condenser 24 (125°C), and discharged through line 25.

The $H_2S$ concentration in the residual gas line 26 is controlled by an $H_2S$ analyzer 28 to a range from 0.1-0.5 % by volume. The $H_2S$ analyzer controls a control valve in combustion air line 29.

The residual gas is passed through line 26 to the sulfur removing stage 30. This sulfur removing stage may be a known sulfur removing process, such as, for example, a dry-bed oxidation stage, an absorption stage or a liquid oxidation stage. The air required for the oxidation is supplied through line 31. The sulfur formed is discharged through line 32.

The gas is then passed through line 33 to an after-burner 34 before being discharged through chimney 35.

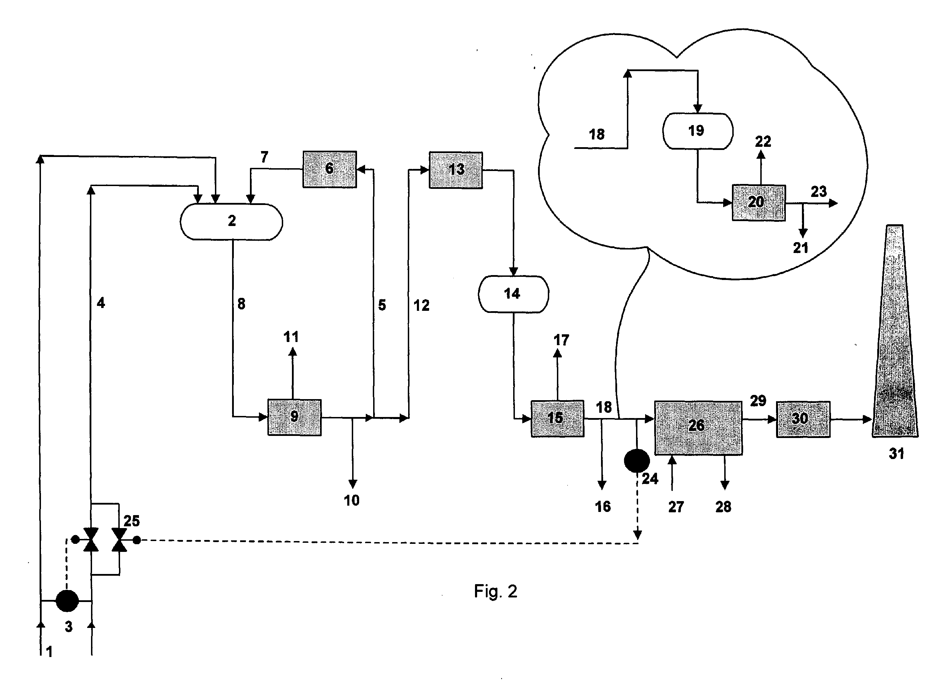

As shown in figure 2, a lean Claus feedstock gas is supplied through line 1 to an oxidation reactor 2. An amount of oxidation air controlled by the quantity ratio regulator 3 and $H_2S$ analyzer 24 is passed to the oxidation reactor through line 4. In the oxidation reactor a portion of the $H_2S$ is oxidized over a special catalyst to form $SO_2$ where after the Claus reaction takes place. To prevent an unduly high temperature from arising within the oxidation reactor, as a result of the reaction heat, a quantity of gas is recycled by means of blower 6 through lines 5 and 7. The gas from reactor 2 is passed through line 8 to sulfur condenser 9, where the sulfur formed during the reaction is condensed at 150°C and discharged through line 10. The heat generated during the reaction is dissipated in sulfur condenser 9 with generation of steam, which is discharged through line 11. The gas is passed through line 12 to heater 13, where it is heated, for example, to 300°C before supplied to Claus reactor 14, which is being regenerated from the collected sulfur. In condenser 15, the sulfur is condensed at 125°C and discharged through line 16, and steam generated is discharged through line 17.

The process gas is passed through line 18 to the last Claus reactor 19. This reactor is operating at a low temperature (sub-dewpoint mode).

In condenser 20, the sulfur is condensed at 125°C, and discharged through line 21. Steam is discharged through line 22.

The $H_2S$ concentration in the residual gas line 23 is controlled by an $H_2S$ analyzer 24 to a range from 0.1-0.5 percent by volume. The $H_2S$ analyzer controls a control valve in the combustion air line 25.

The residual gas is passed through line 23 to the sulfur removing stage 26. The air required for the oxidation is supplied through line 27. The sulfur formed is discharged through line 28. The gas is then passed through line 29 to an after-burner 30 before being discharged through chimney 31.

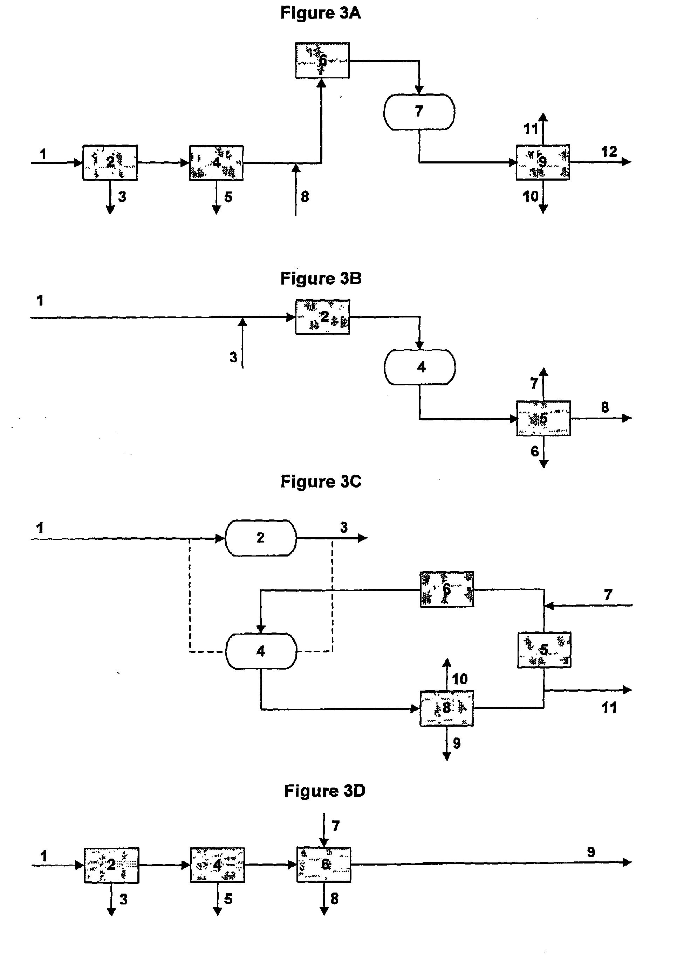

Figure 3 shows in greater detail the oxidation or absorption in a dry bed and the oxidation in a liquid as indicated more generally in 30 of figure 1 or 26 of figure 2.

In figures 1 and 2, the residual gas is supplied through lines 26 and 23, respectively, in figure 3, the residual gas is supplied through line 1.

In figure 3a, after the removal of the sulfur from the residual gas in separator 2, which is discharged through line 3, and the condensation of the water in 4, which is discharged through line 5, the gas is supplied through a heater 6 to a selective oxidation reactor 7. The removal of sulfur and water in 2 and 4 respectively, can take place using a known method, for example, as disclosed in US patent 4526590. In the selective oxidation reactor 7, a catalyst may be provided, for example, as described in the French patent publications 8009126, 8105029 or 8301426. The required oxidation air is supplied through line 8.

From the reactor, the gas flows to a sulfur condenser 9. The sulfur condensed is discharged through line 10, and the steam generated through line 11. The gas next flows through line 12 to the after-burner as designated by 34 in figure 1 and 30 in figure 2.

As shown in figure 3b, the residual gas is supplied through line 1 and heater 2 direct to the selective oxidation stage, that is to say, without a preceding sulfur and water removing stage. This embodiment can be used when a catalyst is present in the oxidation reactor 4, as described above, consisting of a non-Claus active carrier to which at least 0.1% by weight of a catalytically active material, in particular a metal oxide, has been applied, so that the specific area of the catalyst is more than 20 $m^2/g$, while the average pore radius is at least 25 Å. The oxidation air required is supplied through line 3. The sulfur condensed in sulfur condenser 5 is discharged through line 6 and the steam generated through line 7. The gas next flows through line 8 to the after-burner designated by 34 in figure 1 and 30 in figure 2.

As shown in figure 3c the residual gas is passed through line 1 to a reactor 2 filled with an absorption mass, for example, as described in European patent no. 71983, published December 10th, 1986. In reactor 2, the hydrogen sulfide is removed from the residual gas by absorption. The gas next flows through line 3 to the after-burner, designated by 34 in figure 1 and by 30 in figure 2. When the bed is saturated, it is regenerated. Reactor 4 is connected in parallel to reactor 2 and is regenerated. By means of a circulation blower 5, a quantity of gas is circulated. This gas is heated in heater 6. The air required for the oxidation is supplied through line 7. The gas flows from reactor 4 to sulfur condenser 8. The sulfur condensed is discharged through line 9 and the steam generated through line 10. To keep the system at the required pressure a small gas stream is discharged through line 11 and recycled to the feedstock for the Claus plant (line 1 in figures 1 and 2).

As shown in figure 3d, sulfur is removed in separator 2, which is discharged through line 3. Subsequently, in condenser 4, water is condensed which is removed through line 5. The gas is passed to the liquid oxidation stage 6. The oxidation stage may contain, for example, a basic solution of sodium carbonate, ADA (anthraquinone disulfonic acid) and sodium metavanadate, as used in the well-known Stretford process.

$H_2S$ is absorbed in the liquid and subsequently oxidized with air. The oxidation air is supplied through line 7 and the sulfur formed is discharged through line 8. The gas next flows through line 9 to the after-burner (34 in figure 1 and 30 in figure 2).

The invention is illustrated by the following examples.

### EXAMPLE 1 (FOR COMPARISON)

Using the apparatus as described with reference to figure 1, however, excluding the sulfur removal stage 30, the Claus reaction is performed in a sulfur recovery unit having one catalytic Claus stage operating above dewpoint and two -switching- reactors, of which the first reactor is in regeneration mode (above the dewpoint) and the other is in sub-dewpoint mode. The Claus reactors are filled with usual Claus catalyst such as the alumina catalysts known to the artisan. The first Claus reactor has an inlet temperature of 240 °C, the second 210 °C during normal operation and 300 °C during regeneration, the third reactor has an inlet temperature of 125 °C during sub-dewpoint operation. Supplied to the thermal stage are a Claus gas, containing 90 vol.% $H_2S$, corresponding to 90 kmoles/h,

4 vol.% $CO_2$, 5 vol.% $H_2O$ and 1 vol.% $C_2H_6$ and 48.5 kmoles/h $O_2$ (a "deficit" of 0%) as air oxygen.

The tail gas composition after the third catalytic stage is as shown below. A total sulfur recovery efficiency (SRE) of 98.90% is obtained.

| Component | mol/h | vol. % | % SRE, losses % |
|---|---|---|---|
| H₂S | 0.54 | 0.20 | 0.60 |
| SO₂ | 0.27 | 0.10 | 0.30 |
| COS + CS₂ (as S₁) | 0.045 | 0.02 | 0.05 |
| S-vapor (S₁) | 0.135 | 0.05 | 0.15 |
| | | | 0.10     SRE = 98.90% |

**EXAMPLE 2 (FOR COMPARISON)**

The Claus reaction is now performed in a sulfur recovery unit having one catalytic Claus stage operating above dewpoint and three - switching- sub-dewpoint reactors, of which the first reactor is in regeneration mode and the others are in the sub-dewpoint mode (Other conditions as in Example 1). Supplied to the thermal stage are a Claus gas, containing 90 vol.% H₂S, corresponding to 90 kmoles/h,
4 vol.% $CO_2$, 5 vol.% $H_2O$ and 1 vol.% $C_2H_6$ and 48.5 kmoles/h $O_2$ (a "deficit" of 0%) as air oxygen.
The tail gas composition after the fourth catalytic stage is as shown below. A total sulfur recovery efficiency of 99.35% is obtained.

| Component | kmol/h | vol.% | % SRE, losses |
|---|---|---|---|
| H₂S | 0.27 | 0.10 | 0.30 |
| SO₂ | 0.135 | 0.05 | 0.15 |
| COS + CS₂ (as S₁) | 0.045 | 0.02 | 0.05 |
| S-vapor (S₁) | 0.135 | 0.05 | 0.15 |
| | | | 0.65    → SRE = 99.35% |

**EXAMPLE 3 (FOR COMPARISON))**

Using the apparatus as described with reference to figures 1 and 3b, the Claus reaction is performed in a sulfur recovery unit having two conventional catalytic Claus stages operating above dewpoint ($T_{inlet}$: first reactor 240 °C; second reactor 210 °C). Supplied to the thermal stage are a Claus gas containing 90 vol.% H₂S corresponding to 90 kmoles/h, 4 vol.% $CO_2$, 5 vol.% $H_2O$ and 1 vol.% $C_2H_6$ and 47.45 kmoles/h Of $O_2$ (a "deficit" of 2.2%) as air oxygen. The H₂S volume percentage in the residual gas after the second catalytic stage is 0.90.
The dry-bed oxidation is carried out using a water insensitive oxidation catalyst, comprising a silica carrier impregnated with iron oxide such as normally used in the SUPERCLAUS process. The inlet temperature is 210 °C. Using this catalyst with an oxidation efficiency of 86%, a total sulfur recovery percentage of 99.10% is obtained, corresponding with a tail gas composition at the outlet of the dry-bed oxidation stage as shown below.

| Component | kmol/h | vol.% | % SRE, losses | |
|---|---|---|---|---|
| $H_2S$ | 0.045 | 0.02 | 0.05 | |
| $SO_2$ | 0.585 | 0.22 | 0.65 | |
| $COS + CS_2$ | 0.045 | 0.02 | 0.05 | |
| S-vapor ($S_1$) | 0.135 | 0.05 | 0.15 | |
| | | | 0.90 | $\rightarrow$ ·SRE = 99.10% |

**EXAMPLE 4 (FOR COMPARISON)**

The sulfur recovery unit is now equipped with three conventional catalytic Claus stages operating above dewpoint and one oxidation stage. The inlet temperatures of the reactors are as in the previous example, the third reactor has an inlet temperature of 195 °C. The amount of air $O_2$ is 47.55 kmoles/h (a "deficit" of 2.0%). The $H_2S$ volume percentage in the residual gas after the third catalytic stage is 0.70.

The dry-bed oxidation is carried out using a water insensitive oxidation catalyst with an oxidation efficiency of 86%. A total sulfur recovery percentage of 99.40% is obtained, corresponding with a tail gas composition at the outlet of the dry-bed oxidation stage as shown below.

| Component | kmol/h | vol.% | % SRE, losses | |
|---|---|---|---|---|
| $H_2S$ | 0.027 | 0.01 | 0.03 | |
| $SO_2$ | 0.333 | 0.12 | 0.37 | |
| $COS + CS_2$ | 0.045 | 0.02 | 0.05 | |
| S-vapor ($S_1$) | 0.135 | 0.05 | 0.15 | |
| | | | 0.60 | $\rightarrow$ SRE = 99.40% |

**EXAMPLE 5**

Using the apparatus as described with reference to figure 1 and 3b, the Claus reaction is performed in a sulfur recovery unit having one catalytic Claus stage operating above dewpoint (e.g. about 240 °C) and two -switching- sub-dewpoint reactors, of which the first reactor is in the regeneration mode (at about 300 °C) and the other is in the sub-dewpoint mode (at about 125 °C). Supplied to the thermal stage are a Claus gas, containing 90 vol.% $H_2S$, corresponding to 90 kmoles/h, 4 vol.% $CO_2$, 5 vol.% $H_2O$ and

1 vol.% $C_2H_6$ and 43.3 moles/h $O_2$ (a "deficit" of 1 %) as air oxygen. The $H_2S$ volume percentage in the residual gas after the third catalytic stage is 0.30, the $SO_2$ volume percentage is 0.0025.

The dry-bed oxidation is carried out (at 210 °C at inlet) using a water insensitive oxidation catalyst with an oxidation efficiency of 86%. A total sulfur recovery percentage of 99.66% is obtained, corresponding with a tail gas composition at the outlet of the dry-bed oxidation stage as shown below.

| Component | kmol/h | vol.% | % SRE, losses | |
|---|---|---|---|---|
| $H_2S$ | 0.017 | 0.006 | 0.02 | |
| $SO_2$ | 0.108 | 0.04 | 0.12 | |
| $COS + CS_2$ (as $S_1$) | 0.045 | 0.02 | 0.05 | |
| $S_{-vapor}$ ($S_1$) | 0.135 | 0.05 | 0.15 | |
| | | | 0.34 | $\rightarrow$ SRE = 99.66% |

## Claims

**1.** Process for the recovery of sulfur from a hydrogen sulfide containing gas, comprising:

a. Oxidizing part of the hydrogen sulfide in a gaseous stream with oxygen or an oxygen containing gas in an oxidation stage to sulfur dioxide, and thereafter reacting the major part of the remaining hydrogen sulfide and the major part of sulfur dioxide to elemental sulfur and water,

b. reacting the product gas of oxidation stage a) in at least three catalytic reaction systems wherein

- at least one system (i) is operating above the sulfur dewpoint in accordance with the Claus equation

$$2\,H_2S + SO_2 \Leftrightarrow 2\,H_2O + 3/n\,Sn;$$

- at least one system (ii) is operating at a sub-dewpoint temperature in accordance with the Claus equation, downstream of system (i); and
- at least one system (iii) is regenerating above the dewpoint of sulfur or operating in accordance with the Claus equation above the dewpoint of sulfur,

c. selectively oxidizing $H_2S$ in the gas leaving stage b (in particular leaving) the (last) sub-dewpoint Claus reactor) to elemental sulfur, preferably employing for this purpose a catalytic stage including a selective oxidation catalyst, which is substantially insensitive to the presence of water vapor in the gas stream and is ineffective in promoting the establishment of the Claus equilibrium: $2\,H_2S + SO_2 \Leftrightarrow 2\,H_2O + 3/n\,S_n$.

**2.** A process as claimed in claim 1, wherein the selective oxidation is effected in a dry oxidation bed.

**3.** A process as claimed in any of claims 1 or 2, wherein a catalyst is used for the selective oxidation step 1c., which catalyst preferably comprises a carrier material of which under the reaction conditions applied, the surface exposed to the gaseous phase does not exhibit activity for the Claus reaction, and a catalytically active material, the specific area of the catalyst being more than 20 $m^2/g$ catalyst, and having an average pore radius of at least 25 Å.

**4.** A process as claimed in claim 3, wherein the gas obtained in step b has an $H_2S$ concentration of 0.1-0.8 % by volume and the oxidation efficiency to sulfur of the oxidation catalyst of 80-96%.

**5.** A process according to claim 4, wherein the $H_2S$ concentration is 0.1-0.5, preferably 0.2-0.4 % by volume.

**6.** A process as claimed in claim 3-5, wherein the catalyst contains silica or alpha-alumina as carrier material.

**7.** A process as claimed in claim 3-6, wherein the catalytically active material of the oxidation catalyst is present on the carrier in a proportion of 3-10% by weight calculated on the total mass of the catalyst.

**8.** A process as claimed in any of the claims 3-7, wherein the catalytically active material is a metal oxide.

**9.** A process according to claim 8, wherein the metal oxide is a mixed oxide of two or more metals, or a mixture of metal oxides.

**10.** A process as claimed in claim 8 or 9, wherein the oxide comprises iron oxide

**11.** A process according to claim 10, wherein the oxide is a mixed oxide of iron and at least one element selected from the group consisting of chromium and zinc.

**12.** A process according any of the preceding claims, where the $H_2S$ concentration of the gas obtained in step b is adjusted during the switching of the sub-dewpoint reactor(s).

**13.** A process according claim 12 in which said $H_2S$ concentration is kept between 0.5 and 3 vol%, preferably between 1.0 and 1.5 vol%.

**14.** A process according to any of the preceding claims, wherein in systems (ii) and (iii) reactors are used that alternatingly operate sub-dewpoint and regenerate at a temperature above the dewpoint.

**15.** A process according to any of the preceding claims, wherein system (iii) is regenerated in-line with the gas stream.

**16.** A process according to any of the claims 1-14, wherein system (iii) is regenerated off-line, preferably in a closed loop.

**17.** Sulfur recovery installation for carrying out a method according to any one of the preceding claims, comprising at least one hydrogen sulfide oxidation unit; at least one Claus reactor designed to operate above the sulfur dewpoint, at least two Claus reactors designed to be alternatingly operating sub-dewpoint and regenerating above dewpoint; and downstream of said Claus reactors at least one unit for selectively oxidizing $H_2S$.

Fig. 1

Fig. 2

## Figure 3A

## Figure 3B

## Figure 3C

## Figure 3D

**European Patent Office**

**EUROPEAN SEARCH REPORT**

Application Number

EP 04 07 5104

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | GOAR B G ET AL: "SUPERCLAUS: PERFORMANCE WORLD-WIDE" SULPHUR, LONDON, GB, no. 220, 1 May 1992 (1992-05-01), pages 44-47, XP000255775 ----- | | C01B17/04 |
| A | CONNOCK L: "ENHANCED SULPHUR RECOVERY" SULPHUR, THE BRITISH SULPHUR CO., LONDON, GB, no. 286, May 2003 (2003-05), pages 29-39, XP001162383 ISSN: 0039-4890 ----- | | |
| A | BORSBOOM H ET AL: "THE EUROCLAUS PROCESS" May 2000 (2000-05), ACHEMA, XX, XX, PAGE(S) A,1-14 , XP000953587 ----- | | |
| A | US 4 769 229 A (MCGALLIARD RUSSELL L) 6 September 1988 (1988-09-06) ----- | | |
| D,A | US 4 988 494 A (LAGAS JAN A ET AL) 29 January 1991 (1991-01-29) ----- | | TECHNICAL FIELDS SEARCHED (Int.Cl.7) C01B |

The present search report has been drawn up for all claims

| Place of search | Date of completion of the search | Examiner |
|---|---|---|
| The Hague | 25 June 2004 | Zalm, W |

EPO FORM 1503 03.82 (P04C01)

**ANNEX TO THE EUROPEAN SEARCH REPORT
ON EUROPEAN PATENT APPLICATION NO.**    EP 04 07 5104

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2004

| Patent document cited in search report | | Publication date | Patent family member(s) | | Publication date |
|---|---|---|---|---|---|
| US 4769229 | A | 06-09-1988 | CA | 1294113 C | 14-01-1992 |
| US 4988494 | A | 29-01-1991 | NL | 8600960 A | 16-11-1987 |
| | | | AT | 78794 T | 15-08-1992 |
| | | | AU | 583982 B2 | 11-05-1989 |
| | | | AU | 7149787 A | 22-10-1987 |
| | | | BR | 8701855 A | 26-01-1988 |
| | | | CA | 1323173 C | 19-10-1993 |
| | | | CN | 87103563 A ,B | 06-01-1988 |
| | | | DE | 3780682 D1 | 03-09-1992 |
| | | | DE | 3780682 T2 | 10-12-1992 |
| | | | DK | 183087 A | 17-10-1987 |
| | | | EP | 0242006 A1 | 21-10-1987 |
| | | | ES | 2033800 T3 | 01-04-1993 |
| | | | FI | 871614 A ,B, | 17-10-1987 |
| | | | GR | 3005393 T3 | 24-05-1993 |
| | | | IN | 169395 A1 | 12-10-1991 |
| | | | JP | 1841041 C | 25-04-1994 |
| | | | JP | 5051522 B | 02-08-1993 |
| | | | JP | 62297202 A | 24-12-1987 |
| | | | MX | 169298 B | 29-06-1993 |
| | | | NO | 871561 A ,B, | 19-10-1987 |
| | | | PT | 84677 A ,B | 01-05-1987 |
| | | | SG | 59194 G | 28-04-1995 |
| | | | SU | 1709900 A3 | 30-01-1992 |
| | | | YU | 68387 A1 | 31-10-1988 |

EPO FORM P0459

For more details about this annex : see Official Journal of the European Patent Office, No. 12/82